# EUROPEAN PATENT SPECIFICATION

(11) **EP 3 280 277 B1**
(45) Date of publication and mention of the grant of the patent: **30.06.2021**
(21) Application number: 16734052.0
(22) Date of filing: 08.04.2016
(51) Int. Cl.: A23L 33/115, A23L 33/12, A23L 33/19, A23L 33/00

(54) **USE OF A NUTRITIONAL COMPOSITION WITH LARGE LIPID GLOBULES COMPRISING VEGETABLE FAT COATED WITH MILK PHOSPHOLIPIDS FOR LIPID DIGESTION**
VERWENDUNG EINER NÄHRSTOFFZUSAMMENSETZUNG MIT GROSSEN FETTKÜGELCHEN ENTHALTEND PFLANZLICHES FETT MIT MILCHPHOSPHOLIPIDBESCHICHTUNG FÜR DIE LIPIDVERDAUUNG
UTILISATION D'UNE COMOSITION NUTRITIONNELLE AVEC DE GRANDS GLOBULES LIPIDIQUES ENROBÉS COMPRENANT DE LA GRAISSE VÉGÉTALE AVEC DES PHOSPHOLIPIDES LACTIQUES POUR LA DIGESTION DE LIPIDES

(30) Priority: 10.04.2015 EP 15163215
(43) Date of publication of application: 14.02.2018
(73) Proprietor: N.V. Nutricia, 2712 HM Zoetermeer (NL)
(72) Inventor: VAN DEN BRAAK, Claudia Catharina Maria, 3584 CT Utrecht (NL); THOMASSEN, Gabriël, 3584 CT Utrecht (NL); ACTON, Dennis Stanley, 3584 CT Utrecht (NL); ABRAHAMSE, Evan, 3584 CT Utrecht (NL)
(74) Representative: Nederlandsch Octrooibureau
(86) International application number: PCT/NL2016/050242
(87) International publication number: WO 2016/163881

(56) References cited:
- WO-A1-2005/051091
- WO-A1-2010/027258
- WO-A1-2011/108934
- WO-A1-2013/036123
- WO-A1-2013/135739
- US-A1- 2014 255 538
- MICHALSKI M C ET AL: "Size Distribution of Fat Globules in Human Colostrum, Breast Milk, and Infant Formula", JOURNAL OF DAIRY SCIENCE, AMERICAN DAIRY SCIENCE ASSOCIATION, US, vol. 88, no. 6, 1 June 2005 (2005-06-01), pages 1927-1940, XP026954492, ISSN: 0022-0302 [retrieved on 2005-06-01]
- FONDACO D ET AL: "Biophysical Aspects of Lipid Digestion in Human Breast Milk and Similac(TM)Infant Form", FOOD BIOPHYSICS, SPRINGER US, BOSTON, vol. 10, no. 3, 19 December 2014 (2014-12-19), pages 282-291, XP035520755, ISSN: 1557-1858, DOI: 10.1007/S11483-014-9388-6 [retrieved on 2014-12-19]

## Description

### FIELD OF THE INVENTION

The present invention is in the field of nutritional compositions, in particular in the field of infant or follow on formula, which have a beneficial effect on lipid digestion, in particular for improving the kinetics of lipid digestion.

### BACKGROUND OF THE INVENTION

Human milk is the major source of energy for many infants during the first part of their lives and is the preferred method of feeding. Human milk is rich in lipids, which are a key source of energy and essential nutrients during infancy. The lipid globule size has an average mode diameter based on volume of about 4 µm. Milk fat globules in human milk or bovine milk are covered with a trilayer membrane, the milk fat globule membrane (MFGM) composed of phospholipids and other polar lipids and membrane proteins.

Breast-feeding is the preferred method of feeding infants. However, there are circumstances that make breast-feeding impossible or less desirable. In those cases infant formulae are a good alternative. The composition of modern infant formulae is adapted in such a way that it meets many of the special nutritional requirements of the fast growing and developing infant. Still it seems that improvements can be made towards the constitution of infant milk formulae. A comparison between lipids in human milk and those in current infant milk formulas shows differences in physical structure. The lipid droplets produced during processing of IMF have a mode diameter based on volume of about 0.3 to 0.5 µm, and are mainly coated with proteins such as casein.

Garcia et al., Food Hydrocolloids, 2014, 35:494-504, disclose that the way lipids are organisation might modulate fatty acid bioavailability leading to health implications. Native, (cow's milk) fat globules of various sizes covered by their biological membrane or homogenized and heat-treated were digested in gastric and duodenal conditions simulating human physiology. Small fat globules were more efficiently hydrolysed than large fat globules by gastric, gastric plus pancreatic, and pancreatic lipases, which was explained by a higher lipid interface area. However, homogenisation, which markedly decreases fat globule size increasing consequently the lipid/water interface area, did not improve gastric or duodenal lipolysis and this was attributed to the change in globule surface composition, in particular proteins versus phospholipids.

On the other hand Bourlieu et al., Food Chemistry, 2015, 182: 224-235 compared, using semi-dynamic gastric in vitro digestions, a minimally processed milk emulsion containing native (cow's milk) fat milk globules, and two processed model infant formulas (homogenized or homogenized/pasteurized) with neo-formed small lipid globules coated mainly with proteins. It was found that the minimally-processed emulsion was lipolyzed slower than processed formulas and that the surface of the droplets was the key parameter to control gastric lipolysis kinetics, the pattern of released fatty acids and proteolysis by faster hydrolysis of adsorbed proteins. Among all the structural parameters, the specific surface area of the droplets in the infant formula was stated to be the key parameter to control the rate of gastric lipolysis, the overall degree of gastric lipolysis and also the pattern of released fatty acids. No effect of globule surface composition was observed.

However, using enriched bovine milk fat fractions or processes to obtain large native milk fat globules as described above to apply in infant formula, is commercially less relevant, as the cow's milk fat fatty acid composition comprises too low amount of essential fatty acids to meet the regulatory requirements for infant formula. Furthermore such processes may not be economically feasible on large scale. Additionally, for food safety reasons heat treatment during the production of infant formula is required, and for producing powdered formula, the preferred format for infant and follow on formula, additional heat is applied during the spray drying step.

In WO 2011/108934 the post-prandial digestion kinetics of a bolus of standard soy oil was determined after 2 weeks of exposure to a diet comprising lipid globules coated with milk phospholipids and it was found that the fat metabolism had altered in order to blunt the peak of post-prandial fat absorption and/or plasma triglyceride levels, prolonging the post-prandial fat absorption and/or plasma triglyceride levels, spreading of post-prandial bioavailability of fat, of a standard fat composition.

Fondaco et al., Food Biophysics, 12/2014; DOI: 10.1007/s11483-014-9388-6, disclose the in vitro digestion of several different infant formulae. A positive correlation between rate of lipolysis and lipid droplet surface area per gram for the infant formulas was found. However, it was found that breast milk did not follow that trend.

US 2014/0255538 discloses a nutritional composition comprising a carbohydrate source, a protein source, and a lipid source including (cow's) milk fat globules formed from an enriched lipid as an infant formulation for promoting lipid digestion in infants. It is suggested that lipolysis is increased as the milk fat globules are more accessible to lipases than the fat globules in standard infant formula.

### SUMMARY OF THE INVENTION

There is a need to have infant formula, follow on formula or growing up formulae, that i) comprise lipid globules that comprise vegetable fat high in essential fatty acids, ii) have been newly formed during the homogenization steps during the production process and iii) preferably have been heat treated during the production process of such formulae, wherein the post prandial fat digestion kinetics are slowed down and more comparable to the kinetics of post prandial fat digestion of human milk.

Lipid digestion kinetics was evaluated in an in vitro model closely mimicking the digestive conditions of infants. The inventors found that when employing nutritional compositions with large lipid globules that comprised vegetable fat high in essential fatty acids, that had been newly formed in a mild homogenization step of an aqueous and fat phase during the production process and that have been heat treated during the production process, with a mode diameter based on volume of 2 to 6 µm, and/or a specific surface area of 0.5 and 15 m²/g lipid, and coated with phospholipids showed a decreased rate of lipolysis when compared to smaller lipid globules, and thus showed a kinetics of lipid digestion closer to human milk.

Surprisingly the specific surface area was not the only determining factor. The inventors found that the rate of lipid hydrolysis was further influenced by the coating of the lipid globules. Large lipid globules coated with milk derived phospholipids showed a slower lipolysis than large lipid globules coated with the same amount of egg phospholipids or soy phospholipids. Transelectron microscopic pictures showed a difference in surface composition.

Furthermore, large lipid globules comprising a mix of cow's milk fat and vegetable fat showed a consistent slightly lower rate of lipolysis, more similar as with human milk, compared to large lipid globules mainly comprising vegetable fat.

The present invention therefore relates to the use of a compositions with a decreased rate of post prandial or gastric lipid digestion kinetics, due to the presence of lipid globules that are larger than conventional, or with a lower specific surface area than conventional, and that comprise a coating comprising milk derived phospholipids, when compared to the rate of post prandial or gastric lipid digestion kinetics of standard infant formula, and which is more comparable to the kinetics of lipolysis observed when feeding human milk. The invention is defined by the appended set of claims.

### DETAILED DESCRIPTION OF THE INVENTION

The present invention thus concerns the use of a nutritional composition comprising lipid globules comprising triglycerides derived from vegetable fat and phospholipids derived from non human mammalian milk and wherein the lipid globules have
- a mode diameter from 2 to 6 µm, or
- a specific surface area from 0.5 to 15 m²/g lipid, or
- a mode diameter from 2 to 6 µm and a specific surface area from 0.5 to 15 m²/g lipid and wherein the lipid globules comprise a coating comprising the phospholipids, in a non-medical method for
- decreasing the rate of gastric lipolysis and/or
- decreasing the rate of postprandial lipolysis in a subject compared to the rate of gastric lipolysis or the rate of postprandial lipolysis of a standard infant formula comprising lipid globules with a mode diameter of about 0.5µm, wherein the nutritional composition comprises at least 70 wt.% triglycerides based on total lipids and comprises 0.5 to 20 wt.% phospholipids based on total lipid, wherein the mode diameter relates to the diameter which is the most present based on volume of total lipid and wherein the specific surface area of lipid globules is the surface area per weight of lipid, and wherein the nutritional composition is an infant formula, a follow on formula and/or a growing up milk and wherein the subject is a human infant with an age below 36 months.

Throughout this description the term 'fat' and 'lipid' or 'lipids' are used interchangeably.

### Lipid component

The composition that is to be administered according to the present or use comprises lipids. The composition comprises at least triglycerides derived from vegetable fat and phospholipids derived from non human mammalian milk. The composition comprises at least 70 wt.%, more preferably at least 80 wt.%, more preferably at least 85 wt.% triglycerides, even more preferably at least 90 wt.% triglycerides based on total lipids. The lipids may further comprise one or more of free fatty acids, monoglycerides and diglycerides.

The lipid provides preferably 30 to 60 % of the total calories of the composition. More preferably the present composition comprises lipid providing 35 to 55 % of the total calories, even more preferably the present composition comprises lipid providing 40 to 50 % of the total calories. When in liquid form, e.g. as a ready-to-feed liquid, the composition preferably comprises 2.1 to 6.5 g lipid per 100 ml, more preferably 3.0 to 4.0 g per 100 ml. In one embodiment, the composition that is to be administered according to the present method or use comprises at least 15 wt.% lipid based on dry weight of the composition. Based on dry weight the composition preferably comprises 10 to 50 wt.%, more preferably 12.5 to 40 wt.% lipid, even more preferably 15 to 35 wt.% lipid, even more preferably 19 to 30 wt.% lipid.

The composition that is to be administered according to the present method or use comprises triglycerides derived from vegetable fat. Derived from vegetable fat means originates from vegetable fat. Preferably the composition comprises vegetable lipids. The presence of vegetable lipids advantageously enables an optimal fatty acid profile, high in polyunsaturated fatty acids and more reminiscent to human milk fat. Using lipids from ruminant milk in particular cow's milk alone, or other domestic ruminant mammals, does not provide an optimal fatty acid profile. This less optimal fatty acid profile, such as a large amount of saturated fatty acids, is known to be not beneficial. Preferably the present composition comprises at least one, preferably at least two lipid sources selected from the group consisting of linseed oil (flaxseed oil), rape seed oil (such as colza oil, low erucic acid rape seed oil and canola oil), salvia oil, perilla oil, purslane oil, lingonberry oil, sea buckthorn oil, hemp oil, sunflower oil, high oleic sunflower oil, safflower oil, high oleic safflower oil, olive oil, black currant seed oil, echium oil, coconut oil, palm oil and palm kernel oil. Preferably the present composition comprises at least one, preferably at least two lipid sources selected from the group consisting of linseed oil, canola oil, coconut oil, sunflower oil and high oleic sunflower oil. Preferably the composition comprises 30 to 99.5 wt.% vegetable lipids based on total lipids, more preferably 35 to 99 wt.%, even more preferably of 40 to 95 wt.%, based on total lipids.

### Phospholipids

The composition that is to be administered according to the present use comprises phospholipids derived from non human mammalian milk. In one embodiment derived from non human mammalian milk means originates from non human mammalian milk. Phospholipids derived from non human mammalian milk comprises glycerophospholipids and sphingomyelin. Phospholipids derived from non human mammalian milk are preferably comprised in a coating on the surface of the lipid globule. By 'coating' is meant that the outer surface layer of the lipid globule comprises phospholipids, whereas these phospholipids are virtually absent in the core of the lipid globule. The presence of non human mammalian milk phospholipids as a coating or outer layer of the lipid globule in the diet was found to modulate the rate of lipid digestion towards the kinetics of lipid digestion of human milk.

Not all phospholipids that are present in the composition need necessarily be comprised in the coating, but preferably a major part is. Preferably more than 30 wt.%, preferably more than 50 wt.%, more preferably more than 70 wt,%, even more preferably more than 85 wt.%, most preferably more than 95 wt.% of the phospholipids that are present in the composition are comprised in the coating of lipid globules.

The composition that is to be administered according to the present use comprises 0.5 to 20 wt.% phospholipids based on total lipid, more preferably 0.5 to 10 wt.%, more preferably 1 to 10 wt.%, even more preferably 1.0 to 5 wt.% even more preferably 1.0 to 2.0 wt.% phospholipids based on total lipid. Preferably at least 80 wt.% of the phospholipids is derived from non human mammalian milk, more preferably at least 90 wt.%, even more preferably at least 95 wt.% or 99% wt. or preferably all of the phospholipids is derived from non human mammalian milk.

In an embodiment the composition that is to be administered according to the present use comprises at least 15 wt.% sphingomyelin based on total phospholipids. Sphingomyelins have a phosphorylcholine or phosphorylethanolamine molecule esterifiedto the 1-hydroxy group of a ceramide. Preferably the nutritional composition comprises at least 20 wt.% sphingomyelin based on total phospholipids. Preferably the amount of sphingomyelin is below 50 wt.% based on total phospholipids.

Preferably the composition that is to be administered according to the present use comprises glycerophospholipids. Glycerophospholipids are a class of lipids formed from fatty acids esterified at the hydroxyl groups on carbon-1 and carbon-2 of the backbone glycerol moiety and a negatively-charged phosphate group attached to carbon-3 of the glycerol via an ester bond, and optionally a choline group (in case of phosphatidylcholine, PC), a serine group (in case of phosphatidylserine, PS), an ethanolamine group (in case of phosphatidylethanolamine, PE), an inositol group (in case of phosphatidylinositol, PI) or a glycerol group (in case of phosphatidylglycerol, PG) attached to the phosphate group. Preferably the composition contains PC, PS, PI and/or PE, more preferably at least PS.

In an embodiment the composition that is to be administered according to the present use comprises at least 1 wt.%, preferably at least 2 wt.% phosphatidylserine based on total phospholipids. Preferably the amount of phosphatidylserine is below 10 wt.% based on total phospholipids.

Phospholipids derived from non human mammalian milk include phospholipids isolated from milk lipid, cream lipid, cream serum lipid, butter serum lipid beta serum lipid, whey lipid, cheese lipid and/or buttermilk lipid. The buttermilk lipid is typically obtained during the manufacture of buttermilk. The butter serum lipid or beta serum lipid is typically obtained during the manufacture of anhydrous milk fat from cream or butter. Preferably the phospholipids are obtained from milk cream. The phospholipids are preferably derived from milk of cows, mares, sheep, goats, buffalos, horses and camels, most preferably from cow's milk. It is most preferred to use a lipid extract isolated from cow's milk. A suitable source of phospholipids derived from non human mammalian milk is the fraction that can be isolated from milk called milk fat globule membrane (MFGM). Hence in one embodiment, the phospholipids to be used in the method according to the present invention are provided as MFGM.

Phospholipids derived from milk fat advantageously decrease the rate of gastric lipolysis and/or decrease the rate of postprandial lipolysis to a larger extent than polar lipids from other sources. The phospholipids are located on the surface of the lipid globule, i.e. comprised in a coating or outer layer. In one embodiment, the lipid globules comprise a monolayer comprising phospholipids derived from milk fat. A suitable way to determine whether the polar lipids are located on the surface of the lipid globules is laser scanning microscopy or trans-electron microscopy. The concomitant use of polar lipids in particular phospholipids, derived from domestic animals milk and trigycerides derived from vegetable lipids therefore enables to manufacture coated lipid globules with a coating more similar to human milk, while at the same time providing an optimal fatty acid profile.

### Milk fat

The composition that is to be administered according to the present use comprises fat or lipids from non-human mammalian milk. Preferably the composition comprises lipids from ruminants milk, preferably cow's milk, goat milk, sheep milk, buffalo milk, yak milk, reindeer milk, and camel milk, most preferably cow's milk. Preferably the non-human mammalian milk component comprises at least 70 wt.% triglycerides, more preferably at least 90 wt.%, more preferably at least 97 wt.%.

Preferably the non-human mammalian milk lipid is derived from the group consisting of butter, butter fat, butter oil, and anhydrous milk fat, more preferably anhydrous milk fat and butter oil. Such milk fat lipid sources are high in triglyceride levels. Furthermore these lipid sources are in the form of a continuous fat phase or in a water-in-oil emulsion form. Using these sources of milk fat during the manufacture of the nutritional composition of the present invention enable the formation of lipid globules, wherein each globule comprises a mixture of vegetable fat and milk fat.

Milk fat in the present invention refers to all lipid components of milk, as produced by mammals, such as the cow, and is found in commercial milk and milk-derived products. Butter as defined herein is a water-in-oil emulsion comprising over 80 wt.% milk fat.

Butter fat as defined herein relates to all of the fat components in milk that are separable by churning, in other words, present in butter.

Anhydrous milk fat (AMF) is a term known in the art and relates to extracted milk fat. Typically AMF comprises more than 99 wt.% lipid based on total weight. It can be prepared from extracting milk fat from cream or butter. Anhydrous butter oil as defined herein is synonymous with AMF.

Butter oil also is a term known in the art. It typically relates to a milk lipid extract with more than 98 wt.% lipid and typically is a precursor in the process of preparing anhydrous milk fat or anhydrous butter oil.

Preferably the composition comprises 5 to 70 wt.% non-human mammalian milk lipids based on total lipids. Preferably the composition comprises 10 to 65 wt.%, even more preferably 15 to 60 wt.%, even more preferably 25 to 55 wt.% non-human mammalian milk lipids based on total lipids. Preferably these milk lipids are selected from the group consisting of butter, butter fat, butter oil, and anhydrous milk fat.

Preferably the ratio of vegetable fat to milk fat ranges from 3/7 to 20/1.

The composition also may comprise non-vegetable lipids and non-milk fat, such as animal fat other than milk fat, such as fish oil, and egg lipid, and microbial, algal, fungal or single cell oils. Preferably the non vegetable, non-milk fat is present in an amount of at most 10 wt.% based on total lipid, more preferably at most 5 wt.%. Preferably the lipid in the nutritional composition according to the invention comprises a fat source comprising long chain polyunsaturated fatty acids (LC-PUFA), selected from the group consisting of fish oil, marine oil, algal oil, microbial oil, single cell oil and egg lipid in an amount of 0.25 to 10 wt.% based on total lipid, preferably in an amount of 0.5 to 10 wt.%.

### Lipid globule size

According to the present invention, lipid is present in the composition in the form of lipid globules. When in liquid form these lipid globules are emulsified in the aqueous phase. Alternatively the lipid globules are present in a powder and the powder is suitable for reconstitution with water or another food grade aqueous phase. Typically and preferably, the lipid globules comprise a core and a surface. The core preferably comprises vegetable fat and milk fat and preferably comprises at least 80 wt.%, more preferably at least 90 wt.% triglycerides and more preferably essentially consists of triglycerides. Not all triglyceride lipids that are present in the composition need necessarily be comprised in the core of lipid globules, but preferably a major part is, preferably more than 50% wt.%, more preferably more than 70 wt.%, even more preferably more than 85 wt.%, even more preferably more than 95 wt.%, most preferably more than 98 wt.% of the triglyceride lipids that are present in the composition are comprised in the core of lipid globules.

The lipid globules to be administered according to the present use have a mode diameter based on volume 2 to 6 µm, preferably form 2.0 to 6.0 µm, more preferably from 2.5 to 6.0 µm, more preferably from 3.0 to 6.0 µm, even more preferably from 3.0 to 5.5 µm, even more preferably from 3.0 to 5.0 µm.

Standard infant formulae or growing up milks have lipid globules with mode diameter well typically about 0.5 µm. It was found that large lipid globules have an improved effect on kinetics of lipid digestion.

The percentage of lipid globules is based on volume of total lipid. The mode diameter relates to the diameter which is the most present based on volume of total lipid, or the peak value in a graphic representation, having on the X-as the diameter and on the Y-as the volume (%). A suitable method to determine the volume of lipid globules and their size distribution is by using a Mastersizer particle size analyzer (Malvern Instruments, Malvern, UK), for example by the method described in Michalski et al, 2001, Lait 81: 787-796. The specific surface area of lipid globules is the surface area per weight of lipid and decreases as the size of globules increases. The specific surface area of the lipid globules can thus be calculated from the particle size distribution of the lipid globules and the concentration and density of the lipid. The lipid globules to be administered according to the present use preferably have a specific surface area of 0.5 to 15 m²/g lipid, preferably from 1.0 to 10.0 m²/g, more preferably from 1.5 to 8.0 m²/g, even more preferably from 2.0 to 7.0 m²/g lipid. D[3,2] is the surface area moment mean or Sauter mean diameter and can be determined with the Mastersizer's particle analyser software. D[4,3] is the volume moment mean diameter or the De Brouckere mean diameter

Methods for obtaining lipid globules with an increased size and/or coating with phospholipids are disclosed in WO 2010/ 0027258 and WO 2010/0027259.

### Fatty acid composition

Herein LA refers to linoleic acid and/or acyl chain (18:2 n6); ALA refers to α-linolenic acid and/or acyl chain (18:3 n3); LC-PUFA refers to long chain polyunsaturated fatty acids and/or acyl chains comprising at least 20 carbon atoms in the fatty acyl chain and with 2 or more unsaturated bonds; DHA refers to docosahexaenoic acid and/or acyl chain (22:6, n3); EPA refers to eicosapentaenoic acid and/or acyl chain (20:5 n3); ARA refers to arachidonic acid and/or acyl chain (20:4 n6); DPA refers to docosapentaenoic acid and/or acyl chain (22:5 n3). PUFA refers to polyunsaturated fatty acids and/or acyl chains comprising 2 or more unsaturated bonds; MUFA refers to fatty acids and/or acyl chains comprising one unsaturated bond; SFA refers to saturated fatty acids and/or acyl chains. Medium chain fatty acids (MCFA) refer to fatty acids and/or acyl chains with a chain length of 8 to 12 carbon atoms. Butyric acid (BA) refer to fatty acids and/or acyl chains comprising 4 carbon atoms.

Preferably the composition that is to be administered according to the present use comprises 10 to 25 wt.% PUFA based on total fatty acids. Amounts above 25 wt.% will be much higher than present in human milk, and will encompass technological problems such as stability in the nutritional composition.

LA preferably is present in a sufficient amount in order to promote a healthy growth and development. The composition therefore preferably comprises less than 20 wt.% LA based on total fatty acids, preferably from 5 to 15 wt.%. Preferably the composition comprises at least 10 wt.% based on total fatty acids. Preferably ALA is present in a sufficient amount to promote a healthy growth and development of the infant. The present composition therefore preferably comprises at least least 1.0 wt.% ALA based on total fatty acids.

Preferably the composition comprises at least 1.4 wt.% ALA based on total fatty acids, more preferably at least 1.5 wt.%. Preferably the composition comprises less than 10 wt.% ALA, more preferably less than 5.0 wt.% based on total fatty acids. In one embodiment, the composition that is to be administered according to the present method or use according to the invention comprises at least 10 wt.% LA and at least 1 wt.% ALA, preferably from 10 to 20 wt.% LA and from 1 to 5 wt.% ALA.

In one embodiment, the composition that is to be administered according to the present use according to the invention comprises at least 0.3 wt.% BA based on weight of total fatty acids. Preferably, the nutritional composition comprises from 0.3 to 4.0 wt.% BA based on weight of total fatty acids. The presence of relatively high amounts of BA is characteristic for triglycerides derived from ruminant milk, such as cow's milk. It is not present in vegetable fat or MCT rich fat such as coconut oil and it is also not found in polar lipids derived from milk fat. So one alternative way of describing the presence of milk fat triglycerides in a composition is to define the fatty acid profile in having a BA content from 0.3 to 4.0 wt.% based total fatty acids. Based on total weight of fatty acids, the composition preferably comprises at least 0.3 wt.% BA, preferably at least 0.5 wt.%, more preferably at least 0.6 wt.%, more preferably at least 0.8 wt.%. Preferably the composition has a wt.% of BA below 4 wt.% based on weight of total fatty acids more preferable below 3 wt.%, more preferable below 2.5 wt.%. Without wishing to be bound by theory, the presence of BA may provide the advantageous effects.

In one embodiment, the composition that is to be administered according to the present method or use according to the invention comprises at least 10 wt.% LA, at least 1 wt.% ALA and at least 0.3 wt.% BA, , based on total weight of fatty acids, preferably from 10 to 20 wt.% LA, from 1 to 5 wt.% ALA and from 0.3 to 3 wt.% BA, based on total weight of fatty acids.

Preferably the composition that is to be administered according to the present use according to the invention comprises at least 5 wt.% MCFA based on total fatty acids, more preferably at least 7 wt.%. The composition advantageously comprises less than 15 wt.% MCFA based on total fatty acids, more preferably less than 10 wt.%.

Preferably the composition that is to be administered according to the present method or use according to the invention comprises LC-PUFA, more preferably n-3 LC-PUFA. More preferably, the present composition comprises EPA, DPA and/or DHA, even more preferably DHA. Since a low concentration of DHA, DPA and/or EPA is already effective and normal growth and development are important, the content of n-3 LC-PUFA in the present composition, more preferably DHA, preferably does not exceed 5 wt.% of the total fatty acid content. Preferably the composition comprises at least 0.15 wt.%, preferably at least 0.35 wt.%, more preferably at least 0.75 wt.%, n-3 LC-PUFA, more preferably DHA, of the total fatty acid content. The composition preferably comprises at least 0.25 wt% LC-PUFA based on total fatty acids. Preferably the lipid in the composition comprises a fat source comprising 0.25 wt. % to 5 wt.% LC-PUFA based on total fatty acids of which at least 0.15 wt% n-3 LC-PUFA based on total fatty acids selected from the group consisting of DHA, EPA, and DPA, more preferably DHA

As the group of n-6 fatty acids, especially arachidonic acid (ARA) and LA as its precursor, counteracts the group of n-3 fatty acids, especially DHA and EPA and ALA as their precursor, the composition preferably comprises relatively low amounts of ARA. The n-6 LC-PUFA, more preferably ARA, content preferably does not exceed 5 wt.%, more preferably does not exceed 2.0 wt.%, more preferably does not exceed 0.75 wt.%, even more preferably does not exceed 0.5 wt.%, based on total fatty acids. Since ARA is important in infants for optimal functional membranes, especially membranes of neurological tissues, the amount of n-6 LC-PUFA, preferably of ARA, is preferably at least 0.02 wt.% more preferably at least 0.05 wt.%, more preferably at least 0.1 wt.% based on total fatty acids, more preferably at least 0.2 wt.%. The presence of preferably low amounts of ARA is beneficial in nutrition to be administered to infants below the age of 6 months, since for these infants the infant formulae is generally the only source of nutrition. Preferably the n-6 LC-PUFA/n-3 LC-PUFA weight ratio, more preferably ARA/DHA weigh ratio is below 3, more preferably 2 or below, even more preferably 1 or below.

### Digestible carbohydrates

Preferably the composition that is to be administered according to the present method or use comprises digestible carbohydrate. The digestible carbohydrate preferably provides 30 to 80% of the total calories of the composition. Preferably the digestible carbohydrate provides 40 to 60% of the total calories. When in liquid form, e.g. as a ready-to-feed liquid, the composition preferably comprises 3.0 to 30 g digestible carbohydrate per 100 ml, more preferably 6.0 to 20, even more preferably 7.0 to 10.0 g per 100 ml. Based on dry weight the present composition preferably comprises 20 to 80 wt.%, more preferably 40 to 65 wt.% digestible carbohydrates.

Preferred digestible carbohydrate sources are lactose, glucose, sucrose, fructose, galactose, maltose, starch and maltodextrin. Lactose is the main digestible carbohydrate present in human milk. Lactose advantageously has a low glycemic index. The present composition preferably comprises lactose. The present composition preferably comprises digestible carbohydrate, wherein at least 35 wt.%, more preferably at least 50 wt.%, more preferably at least 75 wt.%, even more preferably at least 90 wt.%, most preferably at least 95 wt.% of the digestible carbohydrate is lactose. Based on dry weight the present composition preferably comprises at least 25 wt.% lactose, preferably at least 40 wt.%.

### Non digestible carbohydrates

Preferably the composition that is to be administered according to the present use comprises non-digestible oligosaccharides. Preferably the present composition comprises non-digestible oligosaccharides with a degree of polymerization (DP) from 2 to 250, more preferably from3 to 60.

Preferably the present composition comprises fructo-oligosaccharides, galacto-oligosaccharides and/or galacturonic acid oligosaccharides, more preferably galacto-oligosaccharides, most preferably transgalacto-oligosaccharides. Preferably the composition comprises a mixture of transgalacto-oligosaccharides and fructo-oligosaccharides. Suitable non-digestible oligosaccharides are for example Vivinal GOS (Frieslandcampina DOMO), Raftilin HP or Raftilose (Orafti).

Preferably, the composition comprises of 80 mg to 2 g non-digestible oligosaccharides per 100 ml, more preferably 150 mg to 1.50 g, even more preferably 300 mg to 1 g per 100 ml. Based on dry weight, the composition preferably comprises 0.25 wt.% to 20 wt.%, more preferably 0.5 wt.% to 10 wt.%, even more preferably 1.5 wt.% to 7.5 wt.%.

### Protein

Preferably the composition that is to be administered according to the present method or use comprises protein. The protein preferably provides 5 to 15% of the total calories. Preferably the composition comprises protein that provides 6 to 12% of the total calories. More preferably protein is present in the composition below 9% based on calories. Human milk comprises a lower amount of protein based on total calories than cow's milk. The protein concentration in a nutritional composition is determined by the sum of protein, peptides and free amino acids. Based on dry weight the composition preferably comprises less than 12 wt.% protein, more preferably from 9.6 to 12 wt.%, even more preferably from 10 to 11 wt.%. Based on a ready-to-drink liquid product the composition preferably comprises less than 1.5 g protein per 100 ml, more preferably from 1.2 to 1.5 g, even more preferably from 1.25 to 1.35 g.

The source of the protein should be selected in such a way that the minimum requirements for essential amino acid content are met and satisfactory growth is ensured. Hence protein sources based on cows' milk proteins such as whey, casein and mixtures thereof and proteins based on soy, potato or pea are preferred. In an embodiment the composition that is to be administered according to the present use comprises casein and whey protein. In case whey proteins are used, the protein source is preferably based on acid whey or sweet whey, whey protein isolate or mixtures thereof and may include α-lactalbumin and β-lactoglobulin. More preferably, the protein source is based on acid whey or sweet whey from which caseino-glyco-macropeptide (CGMP) has been removed. Preferably the composition comprises casein, preferably it comprises at least 3 wt.% casein based on dry weight. Preferably the casein is intact and/or non-hydrolyzed. For the present invention protein includes peptides and free amino acids.

### Other

The composition that is to be administered according to the present use is suitable for providing the daily nutritional requirements to a human with an age below 36 months of age, particularly below 24 months of age, even more preferably below 18 months of age, most preferably an infant with an age of below 12 months or below, most preferably from 0 to 6 months of age. Hence, in an embodiment the nutritional composition is for feeding or is used for feeding a human infant of below 24 months of age, even more preferably below 18 months of age. Most preferably the composition in the present use is for administration to an infant with an age of below 12 months or below is used for feeding.

Preferably the composition that is to be administered according to the present use comprises lipid and protein and digestible carbohydrate wherein the lipid preferably provides 30 to 60 % of total calories, the protein preferably provides 5 to 20 %, more preferably 5 to 15 wt.%, of the total calories and the digestible carbohydrate preferably provides 25 to 75% of the total calories. Preferably the composition comprises lipid providing 35 to 50% of the total calories, protein providing 6 to 12 % of the total calories and digestible carbohydrate providing 40 to 60 % of the total calories Preferably the protein provides 5 to 9 % of the total calories. The amount of total calories is determined by the sum of calories derived from protein, lipids and carbohydrates.

The composition preferably comprises other ingredients, such as vitamins, minerals according to international directives for infant formulae.

The composition that is to be administered according to the present use is an infant formula, a follow on formula or a growing up milk.

In order to meet the caloric requirements of the infant, the composition preferably comprises 45 to 200 kcal/100 ml liquid, more preferably 60 to 90 kcal/100 ml liquid, even more preferably 60 to 75 kcal/100 ml liquid. This caloric density ensures an optimal ratio between water and calorie consumption. The osmolarity of the present composition is preferably between 150 and 420 mOsmol/l, more preferably 260 to 320 mOsmol/l. The low osmolarity aims to reduce the gastrointestinal stress.

Preferably the composition is in a liquid form, with a viscosity below 35 mPa.s, more preferably below 6 mPa.s as measured in a Brookfield viscometer at 20°C at a shear rate of 100 s⁻¹. In one embodiment, the composition that is to be administered according to the present use is in a powdered form, which can be reconstituted with water or other food grade aqueous liquid, to form a liquid, or in a liquid concentrate form that should be diluted with water. It was found that lipid globules maintained their size and coating when reconstituted. Preferably the powder is obtained after the composition wherein the lipid globules were formed has been subjected to a heat treatment. When the composition is in a liquid form, the preferred volume administered on a daily basis is in the range of about 80 to 2500 ml, more preferably about 450 to 1000 ml per day.

### Application

Human milk lipids contribute about 45-55% of the milk energy content, amounting to a total fat intake of about 5.5 kg in a fully breastfed baby during the first six months of life. Lipids are mainly in the form of triglycerides, which are digested in the gastrointestinal tract by lipases. In adults the acid lipases (lingual and gastric lipase) make up 30% of lipid hydrolysis during digestion, with gastric lipase contributing the most. These acid lipases do not require bile acid or colipase for optimal enzymatic activity. In infants, acidic lipases are much more important, providing up to 50% of total lipolytic activity. Pancreatic lipase is secreted from the pancreas. Bile salts secreted from the liver and stored in gallbladder are released into the duodenum, where they coat and emulsify large fat droplets into smaller droplets, thus increasing the overall surface area of the fat, which allows the lipase to break apart the fat more effectively. The resulting monomers (two free fatty acids and one 2-monoacylglycerol) are then moved by way of peristalsis along the small intestine to be absorbed into the lymphatic system. In infants, the pancreatic lipase and bile salt levels are low, so the products from gastric lipolysis play an important role in the digestion of milk lipids by compensating for low levels of pancreatic lipase and emulsification.

It has been found that nutritional compositions with larger than conventional lipid globules that comprise vegetable fat with a mode diameter based on volume of 2 to 6 µm, and/or a specific surface area of 0.5 and 15 m²/g lipid, and coated with phospholipids derived from non human mammalian milk had a lower the rate of lipolysis when compared to standard infant milk formula and more comparable to human milk. In addition when the large lipid globules comprise a combination of vegetable fat an milk fat, an even lower rate of lipolysis was found. A slow lipolysis as observed with human milk and the nutritional composition of the present invention ensures lipid absorption throughout the whole gastro-intestinal tract, thereby activating the feedback mechanisms, such as the ileal brake, to a lesser extent. With regular IMF, a fast lipolyis will overload the small intestine with free fatty acid and induces feedback mechanisms to a higher extent. The overall amount of fat taken up by the body is the same, so there is no influence on energy uptake. The lower rate of lipolysis modulates the fat release in the body and may have an impact on hormone signaling and is believed to have an overall beneficial health effect on infants.

Thus the present invention aims to decrease the rate of gastric lipolysis and/or decrease the rate of postprandial lipolysis in a human infant with an age below 36 months. Preferably the composition to be administered according to the present use is administered orally to the human infant.

### EXAMPLES

### Example 1: Kinetics of in vitro digestion of lipids in an infant formulae with different lipid globules.

Three infant formulas were tested. Infant formula 1 is an infant formula of the present invention and comprised 3.4 g lipid per 100 ml (24.7 wt% based on dry weight), of which 3.2 g vegetable lipid, with 0.1 wt% butyric acid, 18.4 wt.% palmitic acid, 13.5 wt.% linoleic acid, 2.5 wt.% alpha linolenic acid, 0.36 wt.% arachidonic acid and 0.2 wt.% docosahexaenoic acid based on total fatty acids. The amount of phospholipid was 54.4 mg per 100 ml, 1.6 wt.% based on total lipid, of which 1.5 wt.% is derived from cow's milk fat globule membrane. The mode based on volume was about 4.4 µm and about 60 volume % of the lipid globules had a size from 2 to 12 µm as determined with Malvern Mastersizer method. A suitable method to determine the volume of lipid globules and their size distribution is by using a Mastersizer particle size analyzer (Malvern Instruments, Malvern, UK), for example by the method described in Michalski et al, 2001, Lait 81: 787-796. The specific surface area in m²/g lipid was 7. Infant formula 2 is also an infant formula of the present invention and is similar to infant formula 1, but it comprised about 48 wt.% of cow's milk lipid and at least 45 wt.% vegetable lipid. The amount of butyric acid was 1.39 wt.%, the amount of palmitic acid was 17.7 wt.% (of which at least 20 % of residues in the sn2 position) 14.0 wt.% linolenic acid, 2.6 wt.% alpha-linolenic acid, 0.31 wt.% arachidonic acid and 0.2 wt.% docosahexaenoic acid.

Infant formula 3 was a control formula with a similar composition as infant formula number 1, but without the milk derived phospholipids. The mode based on volume was about 0.4 µm and less than 15 volume % of the lipid globules had a size from 2 to 12 µm as determined with Malvern Mastersizer method. The specific surface area in m²/g lipid was about 20.

150 ml Infant formula were subjected to gastric and intestinal conditions using a pH and substrate pump controlled setup at 37°C as described in Van den Braak et al. (Clin Nutr. 2013 Oct;32(5):765-71), adapted to simulate human infant physiology. In short, gastric digestion was mimicked by a gradual pH decrease over 120 minutes from pH 6.8 to pH 4.3 upon addition of 1 M hydrochloric acid, 25 ml of 0.6 mg/ml alpha-amylase, and 52.5 ml of 0.05 mg/ml porcine pepsin (SIGMA), and 0.125 mg/ml fungal lipase (Amano). Comparative experiments showed that digestion of IMF 1 was very similar when using the fungal lipase or rabbit gastric lipase (which is similar to human gastric lipase). Subsequently, intestinal digestion was mimicked over 120 minutes by pH increase to a pH of 7.2 upon addition of 1 M sodium hydroxide / 1 M sodium carbonate, 0.75 ml 2 mg/ml porcine trypsin, 135 ml 0.015 g/ml pancreatin and 0.005 g/ml bile extract (SIGMA). Samples were taken at t=0-10-30-60-90-120 minutes (during gastric digestion) and at t=130-150-180-210-240 minutes (= 10-30-60-90-120 minutes during intestinal digestion). An amount of 1 ml sample collected in glass tubes were frozen at -80 °C for free fatty acids (FFA) analysis by GC. Particle size distribution measurements were performed using Malvern Mastersizer.

The results are shown in Table 1.

**Table 1: Formation of free fatty acids upon digestion of IMF with different lipid globule properties in an in vitro model for infant digestion (n=3).**

| | | Mean FFA formed mg/ml (s.e.) | | |
|---|---|---|---|---|
| | Time (min) | IMF 1 | IMF 2 | IMF 3 |
| Gastric phase | 0 | 0.15 (0.06) | 0.54 (0.41) | 0.08 (0.01) |
| | 10 | 2.09 (0.62) | 1.98 (0.95) | 2.88 (0.86) |
| | 30 | 4.09 (0.48) | 3.05 (0.79) | 5.11 (0.58) |
| | 60 | 4.99 (0.33)* | 4.13 (0.45)* | 7.01 (0.47) |
| | 90 | 5.12 (0.20)* | 4.63 (0.20)* | 7.87 (0.34) |
| | 120 | 5.13 (0.07)* | 4.92 (0.13)* | 8.17 (0.41) |
| Intestinal phase | 130 | 8.81 (0.48)* | 7.51 (0.52)* | 12.83 (0.65) |
| | 150 | 10.38 (0.65) | 9.06 (0.77)* | 14.70 (1.70) |
| | 180 | 11.80 (0.55)* | 12.13 (0.93)* | 16.56 (1.16) |
| | 210 | 13.66 (0.61) | 11.91 (0.99)* | 16.74 (1.26) |
| | 240 | 13.49 (0.19) | 13.76 (0.61) | 17.47 (1.27) |

| | | | | |
|---|---|---|---|---|
| *: P <0.05 vs IMF 3 | | | | |

For both IMF of the present invention the concentration FFA formed during simulated gastrointestinal digestion was significantly lower than for standard, control IMF 3. The average gastric lipolysis after 120 minutes digestion was slower for IMF 1 and 2 compared to regular IMF 3: 37 ± 5 and 33 ± 9 vs. 62 ± 2 µg FFA/min (P=0.002). The lipolysis of IMF 2 was slightly, but consistently lower than IMF 1.

The overall gastrointestinal lipolysis rate (after 240 min) was slower for IMF 1 and 2 compared to regular IMF: 55 ± 3 and 54 ± 6 vs. 72 ± 9 µg FFA/min. The average lipolysis after subsequent 120 minutes digestion under small intestinal conditions was more comparable (∼60 µg FFA/min), for all IMF

### Example 2: Particle size properties of IMF with different lipid globules during in vitro gastric digestion

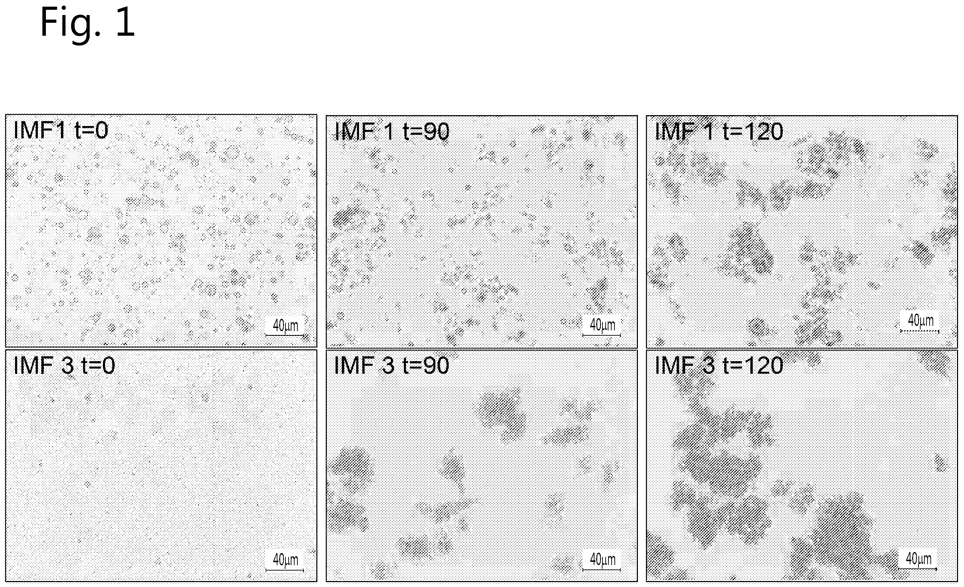

10 ml Samples of IMF 1, IMF 2 and IMF 3 were drawn during gastric digestion in the experiment of example 1 and collected in 15 ml tubes on ice for structural analysis on the same day. One drop of sample was put on a microscope glass slide and examined using light microscopy. Particle size distribution measurements were performed using Malvern Mastersizer. The results are shown in Table 2 and Figure 1.

Figure 1 shows microscopic (20x) images of IMF with different lipid globules during in vitro gastric digestion.

**Table 2: Particle size properties of IMF with different lipid globules during in vitro gastric digestion (n=3).**

| | | Mean Specific surface area (SSA) m²/g (s.e.) | | |
|---|---|---|---|---|
| | Time (min) | IMF 1 | IMF 2 | IMF 3 |
| Gastric phase | 0 | 6.88 (0.93) | 7.26 (1.15) | 19.67 (1,76) |
| | 10 | 6.63 (0.83) | 7.06 (0.96) | 20.30 (1.70) |
| | 60 | 7.00 (1.10) | 6.48 (1.19) | 18.73 (2.66) |
| | 90 | 1.68 (0.95) | 0.94 (0.12) | 0.51 (0.03) |
| | 120 | 0.77 (0.16) | 0.67 (0.03) | 0.45 (0.01) |

| | | Mean Volume weighted mean D[4,3] µg (s.e.) | | |
|---|---|---|---|---|
| | Time (min) | IMF 1 | IMF 2 | IMF 3 |
| Gastric phase | 0 | 3.96 (0.15) | 4.56 (0,67) | 1.52 (0.10) |
| | 10 | 4.45 (0.36) | 5.14 (0,51) | 0.84 (0.09) |
| | 60 | 7.63 (2.02) | 6.25 (0,79) | 3.98 (2.42) |
| | 90 | 9.57 (1.50) | 9.15 (0,99) | 15.15 (0.74) |
| | 120 | 12.26 (1.18) | 12.32 (0,42) | 17.35 (0.36) |

| | | Mean Surface weighted mean D[3,2] µg (s.e.) | | |
|---|---|---|---|---|
| | Time (min) | IMF 1 | IMF 2 | IMF 3 |
| Gastric phase | 0 | 0.99 (0.15) | 0.95 (0.18) | 0.34 (0.03) |
| | 10 | 1.02 (0.14) | 0.96 (0.14) | 0.33 (0.03) |
| | 60 | 0.99 (0.18) | 1.10 (0.24) | 0.36 (0.05) |
| | 90 | 6.54 (2.38) | 7.18 (0.91) | 12.78 (0.68) |
| | 120 | 9.10 (1.59) | 9.75 (0.44) | 14.46 (0.42) |

During gastric digestion, the particle distribution and microscopic images were markedly different between IMF 1, 2 versus IMF 3. In regular IMF 3 the specific surface area (SSA) decreased profoundly due to formation of large protein aggregates. For IMF 1 and 2 of the present invention protein aggregate formation was far less and intact large lipid droplets remained present, with less increase changes in particle size distribution (see Figure 1). Up to 60 min the SSA of did not change much, and the SSA of IMF 3 was higher than that of the other IMF, but at t=90 and t=120 the SSA dropped in all IMF and was lowest in IMF 3. Concomitantly in regular IMF 3 the volume weighted mean diameter (D[4,3]) and the surface weighted mean D[3,2] of the particles werelower than the other IMF up to 60 min. After 60 min the particle size increased in all IMF but increased most profoundly in IMF 3 resulting in significantly larger particles in IMF 3 compared to the other IMF, due to formation of large protein aggregates. For the IMF of the present invention protein aggregate formation was far less and intact large lipid droplets remained present, with less increase changes in particle size distribution.

### Example 3: Effect of different phospholipid coating on lipolysis

A similar experiment was performed as described in example 1, except that different sources of phospholipids were tested. IMF 1 was similar to IMF 1 of example 1.

IMF 2 was similar to IMF 1 except that 1.5 wt.% egg phospholipid was used instead of milk derived phospholipids. IMF 3 comprised 1.5 wt.% soy phospholipids. IMF 4 is the standard, control IMF, similar to IMF 3 of example 1. The mode based on volume of the lipid globules in IMF 2 was about 5.1 µm and in IMF 3 about 4.6 µm.

Results are shown in Table 3.

**Table 3: Formation of free fatty acids upon digestion of IMF with different lipid globule properties in an in vitro model for infant digestion (n=3).**

| | | Mean FFA formed mM (s.e.) | | | |
|---|---|---|---|---|---|
| | Time (min) | IMF 1 | IMF 2 | IMF 3 | IMF 4 |
| Gastric phase | 0 | 0,50 (0,21) | 0,30 (0,05) | 0,35 (0,08) | 0,80 (0,09) |
| | 10 | 7,35 (0,84) | 13,19 (1,21) | 13,00 (1,53) | 15,57 (2,21) |
| | 30 | 12,97 (0,16) | 17,32 (1,88) | 17,28 (1,21) | 22,27 (0,93) |
| | 60 | 16,93 (0,33) | 21,95 (3,33) | 19,62 (1,81) | 26,62 (3,12) |
| | 90 | 18,97 (1,85) | 18,03 (2,80) | 20,31 (2,02) | 29,30 (2,20) |
| | 120 | 17,33 (1,52) | 19,23 (2,26) | 19,24 (2,42) | 32,42 (1,31) |
| Intestinal phase | 130 | 37,35 (6,39) | 36,41 (5,87) | 36,76 (2,89) | 56,23 (1,21) |
| | 150 | 51,15 (1,66) | 49,76 (7,13) | 47,29 (5,62) | 64,86 (3,82) |
| | 180 | 61,30 (4,19) | 68,89 (7,38) | 71,32 (8,57) | 82,42 (3,84) |
| | 210 | 65,20 (1,96) | 75,57 (2,74) | 77,52 (3,36) | 81,87 (0.92) |
| | 240 | 67,03 (1,01) | 74,69 (3,89) | 76,18 (2,11) | 83,03 (2,89) |

For IMF 1 of the present invention the concentration FFA formed during simulated gastrointestinal digestion was lower than for standard, control IMF 4, similar to example 1. IMF 2 and 3 with egg phospholipid or soy phospholipid coating, respectively showed an intermediate effect, but were more similar to the control IMF 4, especially with respect to the initial rate of lipolysis in the gastric phase (see Table 3). The kinetics of FFA formation was very similar between IMF 2 and IMF 3, showing a higher FFA formation than IMF 1 and a slightly lower rate than IMF 4.

The average gastric lipolysis after 120 minutes digestion was slower for IMF 1 compared to regular IMF 4: 0.13 vs 0.22 mM FFA/min. The average gastric lipolysis of IMF 2 and IMF 3 was 0.11 and 0.12 mM FFA/min, respectively.

The overall gastrointestinal lipolysis rate (after 240 min) was slower for IMF 1 compared to regular IMF 4: 0.29 vs. 0.35 mM FFA/min. The overall gastrointestinal lipolysis of IMF 2 and IMF 3 was 0.31 and 0.32 mM FFA/min, respectively.

The average lipolysis after subsequent 120 minutes digestion under small intestinal conditions was more comparable (∼0.35 mM FFA/min) for IMF 1 and IMF 4 and lower than (∼0.45 mM FFA/min) for IMF 2 and IMF 3.

### Example 4: Dynamic intestinal model (TIM)

The IMF 1, IMF 2 and IMF 3 of experiment 1 were digested in vitro using a semi dynamic intestinal model (TIM-1) as described in Abrahamse et al.(2012, Food Dig. 3: 63-77) adapted to simulate human infant physiology and with specific settings to determine lipid digestion and absorption.

Results are shown in table 4.

The lipid hydrolysis of IMF 1 and IMF 2 between 90 to 120 min of gastric and intestinal digestion is lower and slower, than that of IMF 3, comparable to the result of example 1. This difference in hydrolysis starts during early gastric digestion (within 20 min) and continues to have an effect during intestinal digestion. Lipid absorption at the end of digestion was optimal and similar for all IMF (∼ 93%).

**Table 4: % Lipolysis upon digestion of IMF with different lipid globule properties in a dynamic in vitro model for infant digestion (n=3).**

| | | Mean lipolysis % FFA (s.e.) | | |
|---|---|---|---|---|
| | Time (min) | IMF 1 | IMF 2 | IMF 3 |
| Gastric phase | **0-10** | 2,02 (1,59) | 3,99 (0,45) | 2,92 (1,74) |
| | **10-20** | 3,44 (1,84) | 4,96 (0,44) | 8,69 (0,20) |
| | **20-30** | 4,30 (2,16) | 5,31 (0,56) | 6,11 (0,98) |
| | **30-60** | 7,06 (1,80) | 8,06 (0,73) | 5,08 (0,41) |
| | **60-90** | 11,33 (1,75) | 11,68 (1,67) | 11,19 (2,76) |
| | **90-120** | 11,18 (2,30) | 8,64 (2,44) | 14,67 (6,32) |
| Intestinal phase | **0-15** | 11,09 (1,02) | 8,98 (0,78) | 11,70 (1,30) |
| | **15-30** | 13,01 (1,27) | 11,40 (0,31) | 15,26 (0,85) |
| | **30-60** | 15,33 (1,03) | 13,66 (0,22) | 18,71 (0,19) |
| | **60-90** | 15,74 (0,79) | 14,47 (0,82) | 19,38 (1,09) |
| | **90-120** | 13,57 (0,69) | 11,86 (1,15) | 19,47 (1,69) |

### Example 5: Surface properties of the lipid globules as assessed by trans-electron microscopy (TEM).

Sample preparation for TEM imaging was similar to the one described in Gallier et al. (Food Chemistry 2013, 141:3215-3223) with modifications. The samples (human milk, IMF 1 and IMF 3 of example 1) were mixed with 3 % low temperature gelling agarose (kept at 50 °C) at a ratio 1:1 in a 15 ml tube. After cooling, the gelled samples were cut into 1 mm³ blocks and transferred into 3 % glutaraldehyde in 0.1 M cacodylate buffer, pH 7.2. After fixation, the blocks were washed with 0.1 M cacodylate buffer, pH 7.2. Post-fixation was carried out with 1 % osmium tetroxide (OsO4). The blocks were washed with water. Staining en-bloc was carried out with 1% uranyl acetate. The blocks were dehydrated in an ethanol series (50-100%) and embedded in Epon resin. Sections (60 nm) were prepared with a Leica ultramicrotome (Wetzlar, Germany). Poststaining on grids (Cu 100M-H coated with Formvar film and carbon coat) was carried out with 7% Uranyl Acetate and with Reynolds Pb-citrate. The imaging was carried out with a Tecnai 10/12 transmission electron microsope (FEI, Hillsboro, OR, USA) equipped with a SIS CCD camera MegaView II, a single tilt specimen holder and the proprietary software AnalySISPro.

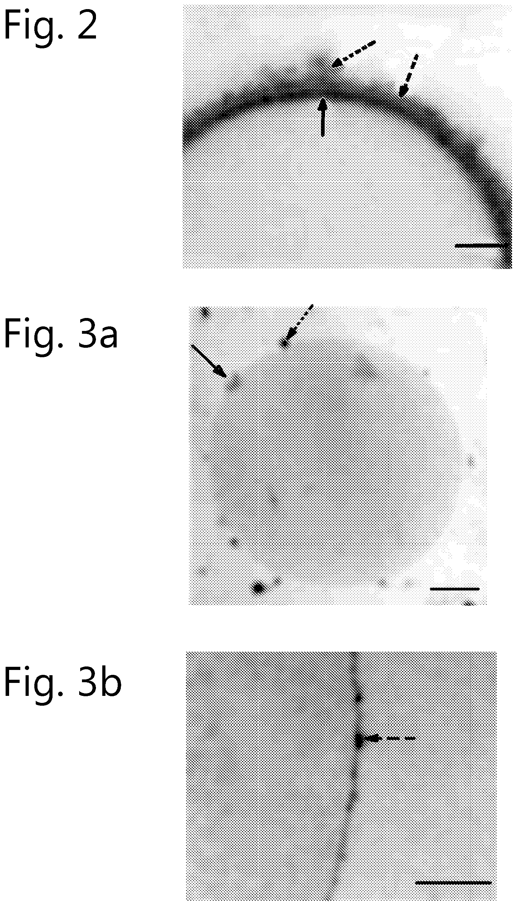

Figure 2 shows part of a typical human milk lipid globule. The thickness of the MFGM trilayer with its glycocalyx varies from 5 to 20 nm. The dashed arrow points at the MFGM bilayer; the diamond arrow points at the MFGM inner monolayer; the dotted arrow points at the MFGM glycocalyx protruding in the aqueous phase; scale bar represents 50 nm.

Figures 3 A and B show lipid globules of IMF 1 with a thin membrane (5-10 nm), including few protein aggregates. Some droplets had casein micelles interacting with the interface. Also bovine MFGM fragments were detected in the aqueous phase interacting at the interface of the fat droplets. The dotted arrow points at casein micelles interacting with the interface of the lipid globules; the solid arrow points at MFGM fragments in the aqueous phase and at the interface of the globules; the dashed arrow points at small interfacial protein aggregates; scale bars represent A: 1 µm; B: 200 nm.

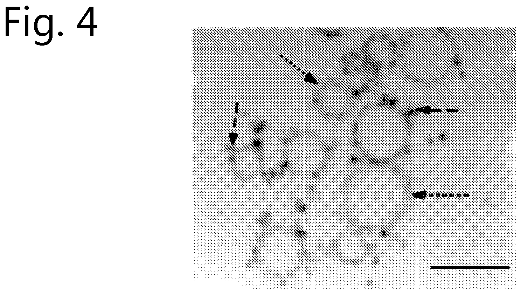

Figure 4 shows the fat droplets of control IMF 3 with a thicker (20-100 nm) and more densely stained protein membrane than the thin membrane surrounding concept IMF 3 lipid globules. Protein aggregates are observed at the interface of control IMF 3 lipid globules but are larger than the ones at the interface of inventive IMF 1 lipid globules. Aggregation of lipid globules was likely due to protein bridges or inter-droplet protein-protein interactions. No MFGM fragments were detected in control IMF 3. The dashed arrows point at interfacial protein aggregates; the dotted arrows point at lipid globules with a thick protein coat; scale bar represents 500 nm.

IMFs have a whey protein:casein ratio of 60:40. β-Lactoglobulin is the main whey protein in IMF. During heat treatment above 65°C, β-lactoglobulin unfolds and interacts with itself and other proteins due to its free thiol group leading to the formation of disulphide bonds between molecules. The aggregation of β-lactoglobulin with other proteins will produce a thicker membrane than the compact and thin (2-3 nm) layer formed by native β-lactoglobulin molecules. As both inventive IMF and control IMFs were heat-treated at temperature higher than 65°C, β-lactoglobulin is more likely to be present as an aggregated protein molecule. Unsaturated phospholipids form a very thin monolayer of about 2 nm and saturated phospholipids, like sphingomyelin, form monolayers of up to 4 nm due to straighter fatty acid chains. So the interface of control IMF 3 lipid globules is composed of caseins and whey proteins only, mostly in the aggregated state, and the interface of inventive IMF lipid globules likely to be composed of phospholipids, MFGM fragments or adsorbed MFGM proteins and lipids, and native undenatured milk proteins and few casein micelles associated with the interface. Using transmission electron microscopy, HM lipid globules, and the lipid globules of the inventive IMF according to the present invention and the current standard IMF 3 were characterized. The IMF of the current invention contains lipid globules having a similar size and a phospholipid coating as in human milk.

These examples are indicative of an improved, i.e. decreased, rate of gastric lipolysis and/or improved, i.e. deceased, rate of postprandial lipolysis by a nutritional composition comprising lipid globules that are larger than conventional, or with a lower specific surface area than conventional, and that comprise a coating comprising milk derived phospholipids. It can be concluded that by feeding infants or young children a formula with lipid globules more resembling human milk lipid globules in composition but also in size and coating, a fat digestion pattern and a bioavailability of ingested fatty acids is present which is thought to be more similar to that of human milk. This effect occurs even though the formula has lipid globules which were neo-formed during the mild homogenization steps and even when undergoing, in the presence of proteins, a heat treatment.

## Claims

1. Use of a nutritional composition in a non-medical method for decreasing the rate of gastric lipolysis and/or decreasing the rate of postprandial lipolysis in a subject as compared to the rate of gastric lipolysis or the rate of postprandial lipolysis of a standard infant formula comprising lipid globules with a mode diameter of about 0.5 µm,
wherein the nutritional composition comprises at least 70 wt.% triglycerides based on total lipids and comprises 0.5 to 20 wt.% phospholipids based on total lipid,
and wherein the nutritional composition comprises lipid globules comprising triglycerides derived from vegetable fat and phospholipids derived from non human mammalian milk and wherein the lipid globules have a mode diameter from 2 to 6 µm and a specific surface area from 0.5 to 15 m²/g lipid, wherein the mode diameter relates to the diameter which is the most present based on volume of total lipid and wherein the specific surface area of lipid globules is the surface area per weight of lipid,
and wherein the lipid globules comprise a coating comprising the phospholipids,
and wherein the nutritional composition is an infant formula, a follow on formula and/or a growing up milk and wherein the subject is a human infant with an age below 36 months.

2. The use according to claim 1 wherein the composition comprises non human mammalian milk fat.

3. The use according to claim 1 or 2, wherein the amount of lipid is at least 15 wt.% based on dry weight of the composition.

4. The use according to any one of the preceding claims wherein the phospholipids comprise at least 15 wt.% sphingomyelin based on total phospholipids.

5. The use according to any one of the preceding claims wherein the phospholipids comprise at least 2 wt.% phosphatidyl-serine based on total phospholipids.

6. The use according to any one of the preceding claims wherein the lipid comprises at least 10 wt.% linoleic acid and at least 1 wt.% alpha-linolenic acid based on total fatty acids.

7. The use according to any one of the preceding claims wherein the lipid comprises at least 0.3 wt.% butyric acid based on total fatty acids.

8. The use according to any one of the preceding claims wherein the nutritional composition comprises casein and whey protein.

9. The use according to any one of the preceding claims which is for providing nutrition to human subjects with an age below 36 months.

10. The use according to any one of the preceding claims wherein the the lipid globules comprise a monolayer comprising phospholipids derived from milk fat.

11. The use according to any one of the preceding claims wherein the phospholipids are provided as milk fat globule membrane.

12. The use according to any one of the preceding claims wherein the lipid globules have a specific surface area from 1.0 to 8.0 m²/g lipid.

13. The use according to any one of the preceding claims wherein the nutritional composition is in the form of a powder.

## Patentansprüche

1. Verwendung einer Nahrungszusammensetzung in einem nichtmedizinischen Verfahren zur Verringerung der Rate der gastrischen Lipolyse und/oder zur Verringerung der Rate der postprandialen Lipolyse in einer Person im Vergleich zur Rate der gastrischen Lipolyse oder zur Rate der postprandialen Lipolyse einer herkömmlichen Säuglingsnahrung, die Lipidkügelchen mit einem Modendurchmesser von etwa 0,5 µm enthält,
wobei die Nahrungszusammensetzung mindestens 70 Gew.-% Triglyceride, bezogen auf die gesamten Lipide, enthält und 0,5 bis 20 Gew.-% Phospholipide, bezogen auf das gesamte Lipid, enthält
und wobei die Nahrungszusammensetzung Lipidkügelchen umfasst, die aus Pflanzenfett gewonnene Triglyceride und aus der Milch nicht-menschlicher Säugetiere gewonnene Phospholipide enthält und wobei die Lipidkügelchen einen Modaldurchmesser von 2 bis 6 µm und eine spezifische Oberfläche von 0,5 bis 15 m²/g Lipid aufweisen, wobei sich der Modaldurchmesser auf den Durchmesser bezieht, der in Bezug auf das Volumen des gesamten Lipids am meisten vorhanden ist, und wobei die spezifische Oberfläche der Lipidkügelchen die Oberfläche pro Gewicht des Lipids ist
und wobei die Lipidkügelchen eine Beschichtung umfassen, die die Phospholipide enthält,
und wobei die Nahrungszusammensetzung eine Säuglingsnahrung, eine Säuglingsfolgenahrung und/oder eine Wachstumsmilch ist und wobei die Person ein menschlicher Säugling mit einem Alter von unter 36 Monaten ist.

2. Verwendung nach Anspruch 1, wobei die Zusammensetzung Milchfett von nicht-menschlichen Säugetieren enthält.

3. Verwendung nach Anspruch 1 oder 2, wobei die Lipidmenge mindestens 15 Gew.-%, bezogen auf das Trockengewicht der Zusammensetzung, beträgt.

4. Verwendung nach einem der vorhergehenden Ansprüche, wobei die Phospholipide mindestens 15 Gew.-% Sphingomyelin, bezogen auf die gesamten Phospholipide, enthalten.

5. Verwendung nach einem der vorhergehenden Ansprüche, wobei die Phospholipide mindestens 2 Gew.-% Phosphatidylserin, bezogen auf die gesamten Phospholipide, enthalten.

6. Verwendung nach einem der vorhergehenden Ansprüche, wobei das Lipid mindestens 10 Gew.-% Linolsäure und mindestens 1 Gew.-% alpha-Linolensäure, bezogen auf die gesamten Fettsäuren, enthält.

7. Verwendung nach einem der vorhergehenden Ansprüche, wobei das Lipid mindestens 0,3 Gew.-% Buttersäure, bezogen auf die gesamten Fettsäuren, enthält.

8. Verwendung nach einem der vorhergehenden Ansprüche, wobei die Nahrungszusammensetzung Kasein und Molkenprotein enthält.

9. Verwendung nach einem der vorhergehenden Ansprüche, die zur Nahrungsversorgung von Menschen mit einem Alter von unter 36 Monaten bestimmt ist.

10. Verwendung nach einem der vorhergehenden Ansprüche, wobei die Lipidkügelchen eine Monoschicht umfassen, die aus Milchfett gewonnene Phospholipide enthält.

11. Verwendung nach einem der vorgehenden Ansprüche, wobei die Phospholipide als Milchfettkügelchenmembran bereitgestellt werden.

12. Verwendung nach einem der vorhergehenden Ansprüche, wobei die Lipidkügelchen eine spezifische Oberfläche von 1,0 bis 8,0 m²/g Lipid aufweisen.

13. Verwendung nach einem der vorhergehenden Ansprüche, wobei die Nahrungszusammensetzung in Form eines Pulvers vorliegt.

## Revendications

1. Utilisation d'une composition nutritionnelle dans un procédé non médical de réduction du taux de lipolyse gastrique et/ou de réduction du taux de lipolyse postprandiale chez un sujet en comparaison avec le taux de lipolyse gastrique ou le taux de lipolyse postprandiale d'une préparation standard pour nourrissons comprenant des globules lipidiques ayant un diamètre modal d'environ 0,5 µm, où la composition nutritionnelle comprend au moins 70% en poids de triglycérides, basé sur les lipides totaux, et comprend 0,5 à 20% en poids de phospholipides, basé sur le lipide total,
et où la composition nutritionnelle comprend des globules lipidiques comprenant des triglycérides dérivés de graisse végétale et des phospholipides dérivés de lait de mammifère non humain et où les globules lipidiques ont un diamètre modal de 2 à 6 µm et une surface spécifique de 0,5 à 15 m²/g de lipide, où le diamètre modal se rapporte au diamètre qui est le plus présent, basé sur le volume de lipide total et où la surface spécifique des globules lipidiques correspond à la surface par poids de lipide,
et où les globules lipidiques comprennent un enrobage comprenant les phospholipides,
et où la composition nutritionnelle est une préparation pour nourrissons, une préparation de suite et/ou un lait de croissance et où le sujet est un nourrisson humain de moins de 36 mois.

2. Utilisation selon la revendication 1, où la composition comprend de la matière grasse de lait de mammifère non humain.

3. Utilisation selon la revendication 1 ou 2, où la quantité de lipide est d'au moins 15% en poids basé sur le poids sec de la composition.

4. Utilisation selon l'une quelconque des revendications précédentes, où les phospholipides comprennent au moins 15% en poids de sphingomyéline, basé sur les phospholipides totaux.

5. Utilisation selon l'une quelconque des revendications précédentes, où les phospholipides comprennent au moins 2% en poids de phosphatidyl-sérine, basé sur les phospholipides totaux.

6. Utilisation selon l'une quelconque des revendications précédentes, où le lipide comprend au moins 10% en poids d'acide linoléique et au moins 1% en poids d'acide alpha-linolénique, basé sur les acides gras totaux.

7. Utilisation selon l'une quelconque des revendications précédentes, où le lipide comprend au moins 0,3% en poids d'acide butyrique, basé sur les acides gras totaux.

8. Utilisation selon l'une quelconque des revendications précédentes, où la composition nutritionnelle comprend de la caséine et des protéines de lactosérum.

9. Utilisation selon l'une quelconque des revendications précédentes, qui consiste à fournir une alimentation à des sujets humains de moins de 36 mois.

10. Utilisation selon l'une quelconque des revendications précédentes, où les globules lipidiques comprennent une monocouche comprenant des phospholipides dérivés de matière grasse de lait.

11. Utilisation selon l'une quelconque des revendications précédentes, où les phospholipides sont apportés sous forme de membrane de globule gras du lait.

12. Utilisation selon l'une quelconque des revendications précédentes, où les globules lipidiques ont une surface spécifique de 1,0 à 8,0 m²/g de lipide.

13. Utilisation selon l'une quelconque des revendications précédentes, où la composition nutritionnelle se présente sous forme de poudre.
